# EUROPÄISCHE PATENTSCHRIFT

(11) **EP 2 095 371 B1**
(45) Veröffentlichungstag und Bekanntmachung des Hinweises auf die Patenterteilung: **31.10.2012**
(21) Anmeldenummer: 07856213.9
(22) Anmeldetag: 22.11.2007
(51) Int. Cl.: G21C 19/16

(54) **VORRICHTUNG ZUM UNTERSATÜTZEN DES BE- ODER ENTLADENS EINES KERNS EINES DRUCKWASSERREAKTORS**
METHOD FOR AIDING THE LOADING OR UNLOADING OF A CORE OF A PRESSURISED WATER REACTOR
DISPOSITIF D'ASSISTANCE AU CHARGEMENT OU AU DÉCHARGEMENT D'UN NOYAU D'UN RÉACTEUR À EAU SOUS PRESSION

(30) Priorität: 30.11.2006 DE 102006057077; 13.02.2007 DE 102007006969
(43) Veröffentlichungstag der Anmeldung: 02.09.2009
(73) Patentinhaber: Areva NP GmbH, 91052 Erlangen (DE)
(72) Erfinder: STAUDIGEL, Robert, 91315 Höchstadt (DE); SOMMER, Jürgen, 74382 Neckarwestheim (DE)
(74) Vertreter: Mörtel & Höfner
(86) Internationale Anmeldenummer: PCT/EP2007/010108
(87) Internationale Veröffentlichungsnummer: WO 2008/064812

(56) Entgegenhaltungen:
- EP-A- 0 220 117
- EP-A- 1 411 528
- WO-A-2004/102584
- US-A- 4 676 945
- US-A1- 2004 196 949

## Beschreibung

Die Erfindung bezieht sich auf eine Vorrichtung zum Unterstützen des Be- oder Entladens eines Kerns eines Druckwasserreaktors.

Zum Be- und Entladen eines Kerns eines Druckwasserreaktors werden sogenannte Brennelementlademaschinen verwendet, die genau in die jeweilige Bennelementposition angefahren und dort zentriert zum Brennelement ausgerichtet werden müssen.

Aus zahlreichen Inspektionsresultaten ist es bekannt, dass sich die Brennelemente eines Druckwasserreaktors im Laufe ihrer Einsatzdauer in Abhängigkeit von ihrer Position im Kern plastisch, d. h. dauerhaft verbiegen oder verdrehen. Diese Durchbiegungen können verschiedene Ursachen haben, beispielsweise eine Anisotropie in der thermischen Ausdehnung oder ein durch radioaktive Strahlung induziertes Längenwachstum der Brennstabhüllrohre oder der Steuerstabführungsrohre. Als wesentliche Gründe für diese Durchbiegung werden jedoch vor allen Dingen eine Wechselwirkung zwischen dem strömenden Kühlwasser und dem Brennelement sowie Inhomogenitäten beim Ein- und Ausströmen des Kühlwassers in bzw. aus dem Kern vermutet.

Durch verbogene oder verdrehte Brennelemente entstehen Probleme beim Zentrieren der Brennelementlademaschine. Bei heute üblichen Brennelementlademaschinen werden zu deren Zentrierung die Zentrierstifte einer Zentrierglocke der Brennelementlademaschine in Zentrierbohrungen der benachbarten Brennelemente eingeführt. Sind diese versetzt oder verdreht, ist ein Zentrieren der Brennelementlademaschine nicht möglich. Darüber hinaus können diese Durchbiegungen ein Ausmaß annehmen, das einen Wechsel der Brennelemente beim Be- oder Entladen des Kerns wird, da stark durchgebogene Brennelemente nicht mehr ohne weiteres aus dem Kern herausgezogen und in den Kern eingeladen werden können.

Aus der DE 1 614 459 B ist eine Brennelementlademaschine bekannt, die an ihrem unterem Ende eine rohrförmige Zentriereinrichtung aufweist. Die Zentriereinrichtung ist an ihrem unteren Rand konisch geformt und gleitet an den Brennelementen entlang, die der zu be- oder entladenen Brennelementposition benachbart sind, drückt diese auseinander und wird auf diese Weise exakt mittig in dem Brennelement positioniert. Eine sichere Zentrierung ist mit dieser bekannten Brennelementlademaschine nur dann möglich, wenn die Brennelementposition umgebende Brennelemente symmetrisch um diese angeordnet sind.

Aus den Patentschriften EP 1 411 528 A und WO 2004 102 584 A sind Richtvorrichtungen bekannt, mit denen die einer zu beladenden Brennelementposition benachbarten Brennelemente derartig verformt werden, dass diese das anschließende Einbringen eines Brennelementes in die zu beladende Position nicht mehr behindern. Aus der US 2004 196 949 A1 ist ein mit einer Mehrzahl von Antriebsaggregaten frei manövrierbares Tauchfahrzeug für Reparaturen im Reaktorkernbereich bekannt.

Der Erfindung liegt nun die Aufgabe zugrunde, eine Vorrichtung zum Unterstützen des Be- und Entladens eines Kerns eines Druckwasserreaktors anzugeben, mit dem der Wechsel eines Brennelements erleichtert ist.

Die genannte Aufgabe wird gemäß der Erfindung gelöst mit einer Vorrichtung mit den Merkmalen des Patentanspruches 1. Gemäß diesen Merkmalen umfasst die Vorrichtung ein mit einer Mehrzahl von Antiebsaggregaten unter Wasser frei manövrierbares Tauchfahrzeug, an dem zumindest ein ausstellbarer Tragarm angeordnet ist, der gegen ein Brennelement des Kerns, das einer zu entladenden oder beladenden Brennelementposition benachbart ist, in einem oberen Bereich unter Ausübung einer quer zur Axialrichtung des Brennelementes wirkenden Kraft zumindest mittelbar anstellbar ist.

Durch diese Maßnahme wird dieses Brennelement von der zu beladenden oder entladenden Brennelementposition entweder weggedrückt oder weggebogen oder näher an diese Brennelementposition herangezogen. In der Regel ist es aber erforderlich, das Brennelement mit einer von der Brennelementposition weg gerichteten Kraft wegzubiegen, so dass ein vergrößerter Freiraum entsteht, der es ermöglicht, ein durchgebogenes Brennelement aus dieser Position zu entnehmen oder in diese Position einzubringen oder ein nicht durchgebogenes Brennelement in eine von durchgebogenen Brennelementen umgebene Brennelementposition einzusetzen. Durch die Verwendung eines Tauchfahrzeugs entfällt außerdem die aufwändige Installation eines Manipulators und eine Behinderung des Einsatzes der BrennelementLademaschine ist weitgehend vermieden.

Zumindest mittelbar im Sinne der vorliegenden Erfindung heißt, dass der Tragarm entweder unmittelbar (beim Wegdrücken) oder mittelbar auf das benachbarte Brennelement wirkt, wenn er an ein diesem Brennelement benachbartes Brennelement angestellt wird, über das die Kraft auf das benachbarte Brennelement übertragen wird.

Wenn der austellbare Tragarm an seinem freien Ende einen von oben in einen Kopfrahmen des Brennelements einführbaren Zapfen umfasst, der sich beim Ausstellen oder Einfahren des Tragarms unter Ausübung der Kraft an eine Innenfläche des Kopfrahmens anlegt, ist insbesondere ein Wegdrücken eines zur beladenden oder entladenden Brennelementposition hingebogenen Brennelement erleichtert, da es auch bei eng aneinander anliegenden Brennelementen problemlos möglich ist, den Dorn in den Kopfrahmen einzuführen.

In einer weiteren vorteilhaften Ausgestaltung der Erfindung umfasst das Tauchfahrzeug zumindest ein Stützelement zum Aufnehmen der vom Tragarm auf das Brennelement ausgeübten Kraft. Auf diese Weise ist eine sichere Verankerung des Tauchfahrzeugs und damit eine wirksame Kraftübertragung auf das Brennelement gewährleistet.

Wenn wenigstens zwei austellbare Tragarme vorgesehen sind, die einander entgegengesetzt wirkende Kräfte auf einander gegenüberliegend die Nachbarpositionen zur Brennelementposition befindliche Brennelemente ausüben, wird die auf das Tauchfahrzeug beim Ausstellen beider Tragarme ausgeübte resultierende Kraft signifikant reduziert.

Vorzugsweise ist das zumindest eine Stützelement durch einen Dorn gebildet, der in eine am Kopfrahmen eines Brennelements definierte und im eingebauten Zustand des Brennelements vertikale, d.h. in einer Längsrichtung des Brennelements verlaufende Zentrierbohrung einführbar ist, das der Brennelementposition und dem oder den Brennelement benachbart ist, an die der bzw. die Tragarme anstellbar sind. Dadurch ist eine weitgehend spielfreie Fixierung des Tauchfahrzeuges möglich.

In einer weiteren besonders vorteilhaften Ausgestaltung der Erfindung weist das Tauchfahrzeug einen u-förmigen Auftriebskörper auf. Auf diese Weise ist es möglich, den Schwerpunkt der Auftriebskraft in die Nähe des Schwerpunktes des Tauchfahrzeugs zu verlegen, ohne das Anfahren der Brennelementlademaschine zu behindern, da diese dann zwischen den Schenkeln des Auftriebskörpers nach unten in die Brennelementposition gefahren werden kann.

Zur weiteren Erläuterung der Erfindung wird auf das Ausführungsbeispiel der Zeichnung verwiesen. Es zeigen:
- Fig. 1: eine Vorrichtung gemäß der Erfindung in einer schematischen perspektivischen Darstellung,
- Fig. 2: die nur in einem Ausschnitt dargestellte Vorrichtung in Arbeitsposition.

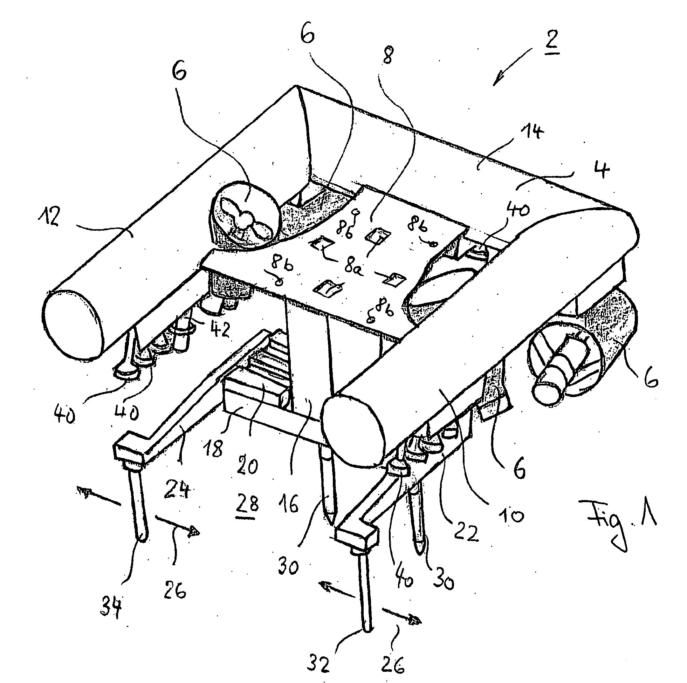

Gemäß Fig. 1 ist als Vorrichtung ein Tauchfahrzeug 2 vorgesehen, das unter Wasser frei manövrierbar ist. Das Tauchfahrzeug 2 umfasst einen u-förmigen Auftriebskörper 4, dessen Auftrieb unter Wasser das Gewicht des Tauchfahrzeugs 2 zumindest annähernd kompensiert. Am Tauchfahrzeug 2 sind eine Mehrzahl von Antriebseinheiten 6 angeordnet, mit denen das Tauchfahrzeug 2 hinsichtlich seines Ortes und hinsichtlich seiner räumlichen Ausrichtung unter Wasser frei positionierbar ist. Die übrigen Baueinheiten des Tauchfahrzeuges 2 und der u-förmige Auftriebskörper 4 sind dabei so ausgelegt und angeordnet, dass die von seinen Schenkeln 10, 12 und seiner Basis 14 aufgespannte Ebene wenigstens annähernd waagrecht orientiert ist, wenn sich das Tauchfahrzeug 2 bei abgeschalteten Antriebseinheiten 6 im Schwebezustand befindet, so dass zur genauen waagrechten Ausrichtung allenfalls geringfügige Korrekturen erforderlich sind, die durch Ansteuern der Antriebseinheiten 6 vorgenommen werden. Mit anderen Worten: Der Schwerpunkt des verdrängten Volumens und der Massenschwerpunkt liegen auf einer Geraden, die senkrecht zur vom Auftriebskörper 4 aufgespannten Ebene verläuft.

Am Auftriebskörper 4 ist eine Greifer- oder Stützplatte 8 befestigt, die die beiden Schenkel 10,12 miteinander und mit der Basis 14 verbindet. Ausgehend von dieser Stützplatte 8 erstreckt sich senkrecht zu der vom u-förmigen Auftriebskörper 4 aufgespannten Ebene eine Säule 16, an deren von der Stützplatte 8 abgewandten Ende eine Tragplatte 18 angeordnet ist. Der Massenschwerpunkt des Tauchfahrzeuges 2 befindet sich außerhalb der vom u-förmigen Antriebskörper 4 aufgespannten Ebene auf der der Tragplatte 18 zugewandten Seite, so dass sich diese ruhend, d.h. im stabilen Schwebezustand (Auftriebskraft ≈ Schwerkraft) unterhalb des Auftriebskörpers 4 befindet. Auf dieser Tragplatte 18 sind zu beiden Seiten der Säule 16 Hydraulikzylinder 20 angeordnet, von denen in der perspektivischen Darstellung der Figur nur die auf einer Seite der Säule 16 befindlichen Hydraulikzylinder 20 sichtbar sind. Am Freiende der Kolben dieser Hydraulikzylinder 20 ist jeweils ein Tragarm 22,24 fixiert, der mit Hilfe dieser Hydraulikzylinder 20 in Richtung der Doppelpfeile 26 senkrecht zur Längsachse der Säule 16 und parallel zur Basis 14 bzw. zur vom u-förmigen Auftriebskörper 4 aufgespannten Ebene linear aus- bzw. eingefahren werden kann.

Die Tragarme 22,24 erstrecken sich parallel zu den Schenkeln 10,12 des Auftriebskörpers 4, d.h. quer zur Ausstellrichtung, und stehen über die Tragplatte 18 vor, so dass die dem freien Ende der Tragarme 22,24 zugewandte Stirnseite der Tragplatte 18 gemeinsam mit den Tragarmen 22,24 einen im Querschnitt u-förmigen, einbautenfreien Zwischenraum 28 festlegen. Dieser einbautenfreie Zwischenraum 28 erstreckt sich über die gesamte Bauhöhe des Tauchfahrzeugs 2, d.h. über dessen Ausdehnung senkrecht zur vom u-förmigen Auftriebskörper 4 festgelegten Ebene.

Auf der dem Auftriebskörper 4 gegenüberliegenden Unterseite der Tragplatte 18 sind zwei Dorne 30 fixiert, die sich parallel zur Säule 16 bzw. senkrecht zur vom Auftriebskörper 4 aufgespannten Ebene erstrecken.

Am freien Ende der Tragarme 22,24 befindet sich jeweils ein Stift oder Zapfen 32,34. Diese Zapfen 32,34 erstrecken sich in die gleiche Richtung wie die Dorne 30 und weisen vom Auftriebskörper 4 weg.

Um eine korrekte Positionierung und Ausrichtung des Tauchkörpers 2 zu ermöglichen, sind außerdem am Auftriebskörper 4 eine Vielzahl von Lichtquellen 40 sowie eine Mehrzahl von Unterwasserkameras 42 angeordnet.

Die Stützplatte 8 enthält außerdem eine Mehrzahl von Öffnungen 8a,b, die zum Andocken und Zentrieren eines Einfachgreifers der Brennelementlademaschine dienen, wenn eine Bergung des Tauchfahrzeugs 2 bei Ausfall der Elektronik oder einzelner Aggregate erforderlich wird.

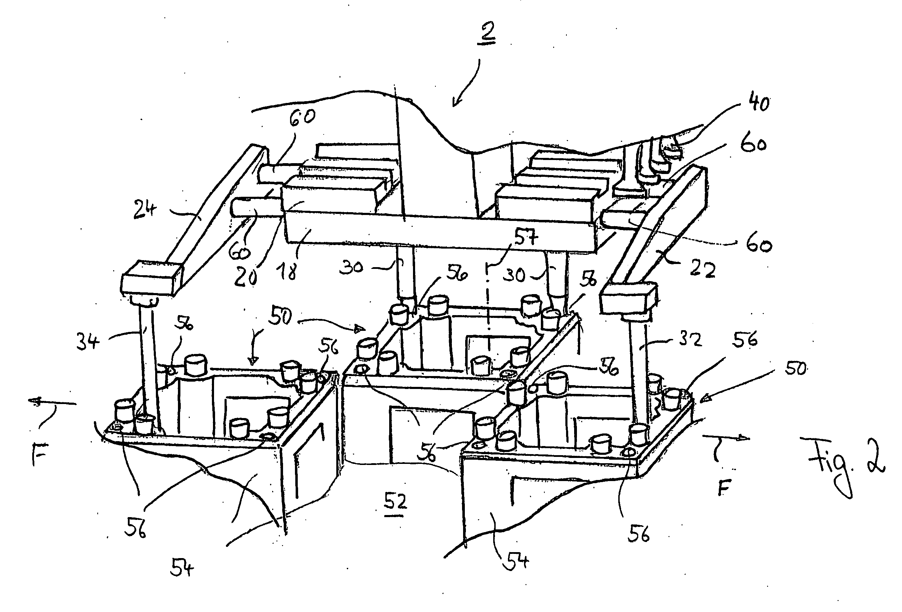

Gemäß Fig. 2 befindet sich das nur in einem Ausschnitt dargestellte Tauchfahrzeug 8 in einer Arbeitsposition über dem Kern eines Druckwasserreaktors, von dem nur der obere Bereich für drei Brennelemente 50 dargestellt ist, die eine im Ausführungsbeispiel leere Brennelementposition 52 umgeben. In der Figur sind nur die Kopfrahmen 54 der Brennelemente 50 sichtbar. Die Kopfrahmen 54 weisen an ihren oberen Stirnseiten in den Ecken jeweils Zentrierbohrungen 56 auf. In diese Zentrierbohrungen 56 sind in Arbeitsposition des Tauchfahrzeugs 2 die Dorne 30 eingefahren, die das Tauchfahrzeug auf diese Weise quer zur Axialrichtung 57 der Brennelemente 50 fixieren. Die Dorne 30 weisen hierzu eine Einführschräge auf und sind an der Tragplatte 18 in einem Abstand montiert, der dem Abstand zweier Zentrierbohrungen 56 entspricht.

In Arbeitsposition sind nun die jeweils an zwei Kolben 60 fixierten Tragarme 22,24 ausgefahren, so dass die in das Innere der in Nachbarposition zur Brennelementposition 52 einander gegenüberliegend befindlichen Brennelemente 50 - im Beispiel in den vom Kopfrahmen 54 gebildeten Innenraum - hineinragenden Zapfen 32,34 jeweils an einer Innenfläche dieser Kopfrahmen 54, d.h. in einem oberen Bereich der Brennelemente 50 anliegen. Durch Ausfahren der Kolben 60 wird somit auf die einander gegenüberliegend zu beiden Seiten der Brennelementposition 52 angeordneten Brennelemente 50 jeweils in Richtung der Pfeile eine Kraft F ausgeübt, die die Brennelemente 50 auseinander drückt, so dass der Abstand zwischen diesen beiden Brennelementen 50 vergrößert ist. Diese Abstandsvergrößerung ist im Bereich der Kopfrahmen 54 maximal.

Aufgrund des zwischen den Tragarmen 22,24 befindlichen freien Zwischenraumes 28 (Fig.1) ist sichergestellt, dass die Brennelementposition 52 von oben frei zugänglich ist, so dass diese Brennelementposition 52 problemlos beladen und entladen werden kann.

Die auf die beiden gegenüberliegenden Brennelemente 50 ausgeübten Kräfte F sind einander entgegengesetzt gerichtet und zumindest annähernd gleich groß, so dass die vom Brennelement 50, in das die Dorne 30 eingeführt sind, aufzunehmende Kraft zumindest annähernd verschwindet, um sicherzustellen, dass nur die beiden einander gegenüberliegenden Brennelemente 50 voneinander weg gedrückt werden. Die in das mittlere Brennelement 50 eingeführten Dorne 30 dienen als zusätzliche Stützelemente, die die auf die Tragarme 22,24 ausgeübte Nettokraft aufnehmen, falls die Kräfte F nicht betragsmäßig gleich sind.

Die Richtungen in denen die Kräfte F ausgeübt werden, d.h. in denen der verfügbare Zwischenraum vergrößert werden soll, richten sich beim Entladen danach, wie die in der Regel c-bogenförmige Durchbiegung eines in dieser Brennelementposition 52 befindlichen Brennelements 50 orientiert oder im Falle des Beladens auch danach, mit welcher Orientierung ein gebrauchtes durchgebogenes Brennelement 50 in diese Brennelementposition 52 eingesetzt werden soll.

Anstelle der in den Figuren dargestellten hydraulischen Linearverstellung der Zapfen 32,34 kann auch eine hydraulisch oder elektromotorisch angetriebene Schwenkbewegung vorgesehen sein. Bei einer elektromotorisch angetriebenen Schwenkbewegung entfällt das Mitführen von Hydraulikleitungen. Zusätzlich ist eine Notentriegelung vorgesehen, die beim Klemmen der Zapfen 32,34 ein zusätzliches Lagerspiel im Schwenklager freigibt, so dass die Zapfen 32,34 aus den Zentrierbohrungen 56 ausgehoben werden können.

Grundsätzlich ist es auch in seltenen Fällen erforderlich, die beiden gegenüberliegenden Brennelemente 50 mit einer zur leeren Brennelementposition 52 hin gerichteten Kraft aufeinander zu zu bewegen, um den Einsatz der Brennelementzentrierglocke in die Zentrierbohrungen 56 zu ermöglichen. In diesem Fall können die Zapfen 32,34 beispielsweise in die Kopfrahmen 54 der den Brennelementen 50 benachbarten Brennelemente eingefahren und in Richtung der leeren Brennelementposition 52 angestellt werden.

## Patentansprüche

1. Vorrichtung zum Unterstützen des Be- oder Entladens eines Kerns eines Druckwasserreaktors, mit einem unter Wasser mit einer Mehrzahl von Antriebsaggregaten (6) frei manövrierbaren Tauchfahrzeug (2), an dem zumindest ein ausstellbarer Tragarm (22,24) angeordnet ist, der gegen ein Brennelement (50) des Kerns, das einer zu entladenden oder beladenden Brennelementposition (52) benachbart ist, in einem oberen Bereich unter Ausübung einer quer zur Axialrichtung (57) dieses Brennelementes (50) wirkenden Kraft (F) zumindest mittelbar anstellbar ist.

2. Vorrichtung nach Anspruch 1, bei der der Tragarm (22,24) an seinem freien Ende einen von oben in einen Kopfrahmen (54) des Brennelements (50) einführbaren Zapfen (32 bzw. 34) umfasst, der sich beim Ausstellen oder Einfahren des Tragarms (32,34) unter Ausübung der Kraft(F) an eine Innenfläche des Kopfrahmens (54) anlegt.

3. Vorrichtung nach Anspruch 1 oder 2, bei der das Tauchfahrzeug (2) zumindest ein Stützelement zum Aufnehmen der vom Tragarm (32,34) auf das Brennelement (56) ausgeübten Kraft (F) umfasst.

4. Vorrichtung nach Anspruch 1, 2 oder 3, bei der wenigstens zwei ausstellbare Tragarme (32,34) vorgesehen sind, die einander entgegengesetzt wirkende Kräfte auf einander gegenüberliegend in Nachbarpositionen zur Brennelementposition (52) befindliche Brennelemente (50) ausüben.

5. Vorrichtung nach Anspruch 3 oder 4, bei der das zumindest eine Stützelement durch einen Dorn (30) gebildet ist, der in eine im Kopfrahmen (54) eines Brennelementes (50) befindliche vertikale Zentrierbohrung (56) einführbar ist, das der Brennelementposition (52) und dem oder den Brennelementen (50) benachbart ist, an die der bzw. die Tragarme (32,34) anstellbar sind.

6. Vorrichtung nach einem der vorhergehenden Ansprüche, bei der das Tauchfahrzeug (2) einen u-förmigen Auftriebskörper (4) aufweist.

## Claims

1. Device for aiding the loading or unloading of a core of a pressurised water reactor, having a freely manoeuvrable submersible vehicle (2) with a plurality of power sources (6) under water, on which at least one tiltable support shaft (22, 24) is arranged, which is at least indirectly adjustable in opposition to a fuel element (50) of the core lying adjacent to a fuel element position (52) which is to be loaded or unloaded, in an upper region under exertion from a force (F) acting transversely to the axial direction (57) of said fuel element (50).

2. Device according to claim 1, wherein the support shaft (22, 24) comprises, at its free end, a pin (32,34) which can be inserted into a head frame (54) of the fuel element (50), which is mounted into an internal surface of the head frame (54) when the support shaft (32, 34) is tilted or retracted under exertion from the force (F).

3. Device according to claim 1 or 2, wherein the submersible vehicle (2) comprises at least one support element to absorb the force (F) exerted by the support shaft (32, 34) on the fuel element (56).

4. Device according to claim 1, 2 or 3, wherein at least two tiltable support shafts (32, 34) are provided, which exert active forces opposite to each other on the fuel element (50) located opposite each other in neighbouring positions to the fuel element position (52).

5. Device according to claim 3 or 4, wherein the at least one support element is formed by a bolt (30), which can be inserted into a vertical central bore hole (56) located in the head frame (54) of a fuel element (50), which is adjacent to the fuel element position (52) and the fuel element(s) (50), onto which the support shaft(s) (32, 34) can be adjusted.

6. Device according to one of the preceding claims, wherein the submersible vehicle (2) has a U-shaped lifting body (4).

## Revendications

1. Dispositif pour aider au chargement ou déchargement d'un coeur d'un réacteur à eau sous pression, comprenant un véhicule de plongée (2) manoeuvrable librement avec une pluralité de groupes d'entraînement (6) sous l'eau, sur lequel est disposé au moins un bras porteur (22, 24) qui peut être déployé, lequel est réglable au moins indirectement, contre un assemblage combustible (50) du coeur qui est voisin d'une position d'assemblage combustible (52) de chargement ou déchargement, dans une zone supérieur de cet assemblage, en exerçant une force (F) agissant transversalement à la direction axiale (57) de cet assemblage combustible (50).

2. Dispositif selon la revendication 1, dans lequel le bras porteur (22, 24) comprend sur son extrémité libre un pivot (32 respectivement 34) pouvant être introduit par le haut dans l'embout supérieur (54) de l'assemblage combustible (50), qui se place sur une surface intérieure de l'embout supérieur (54) lorsque le bras porteur (32, 34) est sorti ou rentré par l'exercice de la force (F).

3. Dispositif selon la revendication 1 ou 2, dans lequel le véhicule de plongée (2) comprend au moins un élément d'appui pour recevoir la force (F) exercée par le bras porteur (32, 34) sur l'assemblage combustible (56).

4. Dispositif selon la revendication 1, 2 ou 3, dans lequel au moins deux bras porteurs (32, 34) pouvant être sortis sont prévus, lesquels exercent des forces agissant de manière opposée l'une à l'autre sur des assemblages combustible (50) se trouvant face à face dans des positions voisines par rapport à la position d'assemblage combustible (52).

5. Dispositif selon la revendication 3 ou 4, dans lequel l'au moins un élément d'appui est formé par un mandrin (30) qui peut être introduit dans un alésage central vertical (56) se trouvant dans l'embout supérieur (54) d'un assemblage combustible (50), est voisin de la position d'assemblage combustible (52) et du ou des assemblage(s) combustible (50) sur lequel/lesquels le respectivement les bras porteur(s) (32, 34) est/sont réglable(s).

6. Dispositif selon l'une des revendications précédentes, dans lequel le véhicule de plongée (2) présente un corps de poussée verticale (4) en U.
